# EUROPEAN PATENT SPECIFICATION

(11) **EP 2 920 433 B1**
(45) Date of publication and mention of the grant of the patent: **03.04.2019**
(21) Application number: 13812137.1
(22) Date of filing: 12.11.2013
(51) Int. Cl.: F01C 1/077, F01C 17/02, F01K 3/24, F01K 7/00

(54) **ROTARY EXPANDER AND COGENERATION PLANT OF ELECTRICAL AND HEAT ENERGY COMPRISING THE ROTARY EXPANDER**
ROTATIONSEXPANDER UND HEIZKRAFTWERK FÜR ELEKTRISCHE UND THERMISCHE ENERGIE MIT DEM ROTATIONSEXPANDER
DISPOSITIF D'EXPANSION ROTATIF ET CENTRALE DE COGÉNÉRATION D'ÉNERGIE ÉLECTRIQUE ET THERMIQUE COMPRENANT LE DISPOSITIF D'EXPANSION ROTATIF

(30) Priority: 15.11.2012 IT MI20121944; 14.01.2013 IT MI20130040
(43) Date of publication of application: 23.09.2015
(73) Proprietor: I.V.A.R. S.P.A., 25080 Prevalle (BS) (IT)
(72) Inventor: OLIVOTTI, Sergio, 36077 Altavilla Vicentina (Vicenza) (IT)
(74) Representative: Galassi, Alessandro
(86) International application number: PCT/IB2013/060085
(87) International publication number: WO 2014/076637

(56) References cited:
- WO-A1-97/10419
- WO-A1-2008/061271
- US-A1- 2011 100 321
- BADR O ET AL: "Expansion machine for a low power-output steam Rankine-cycle engine", APPLIED ENERGY, ELSEVIER SCIENCE PUBLISHERS, GB, vol. 39, no. 2, 1991, pages 93-116, XP025689418, ISSN: 0306-2619, DOI: 10.1016/0306-2619(91)90024-R [retrieved on 1991-01-01]

## Description

The present invention relates to a cogeneration plant of electrical and heat energy comprising a rotary expander (which in the following, for the sake of brevity, will be termed an "expander" or "rotary expander"). The expander is particularly applicable in machines realizing direct and/or inverse thermodynamic cycles of the Rankine or Rankine-Hirn type.

In the following some historical considerations are made in relation to thermodynamic cycles and relative thermodynamic machines.

In 1816 Robert Stirling devised a motor with an open-circuit hot-air thermal cycle from an intermittent flow composed of four steps: air aspiration at atmospheric pressure at ambient temperature, compression of aspirated air, rapid heating and expansion of the compressed air, expulsion of the exhaust air. In a later evolution, with the aim of increasing the heat performance, while keeping the four-phase cycle unvaried, many solutions were developed with different types of closed-circuit alternating and rotary motors and a bi-directional heat exchanger, known as a "regenerator" was inserted into the circuit.

Starting from 1824 Sadi Carnot affirmed the principle according to which in order for a thermal machine to function there must be two sources of heat at different temperatures. In his writing, Carnot theorized on the Carnot cycle, i.e. a purely theoretical cycle which has the characteristic of being the thermodynamic cycle, which evolves between the two sources at different temperatures, having a greater thermodynamic performance. To realize this cycle a study is required of a theoretical thermal machine able to obtain the best possible thermal performance by using perfectly insulating materials, with an absence of friction and a perfect gas as operative fluid.

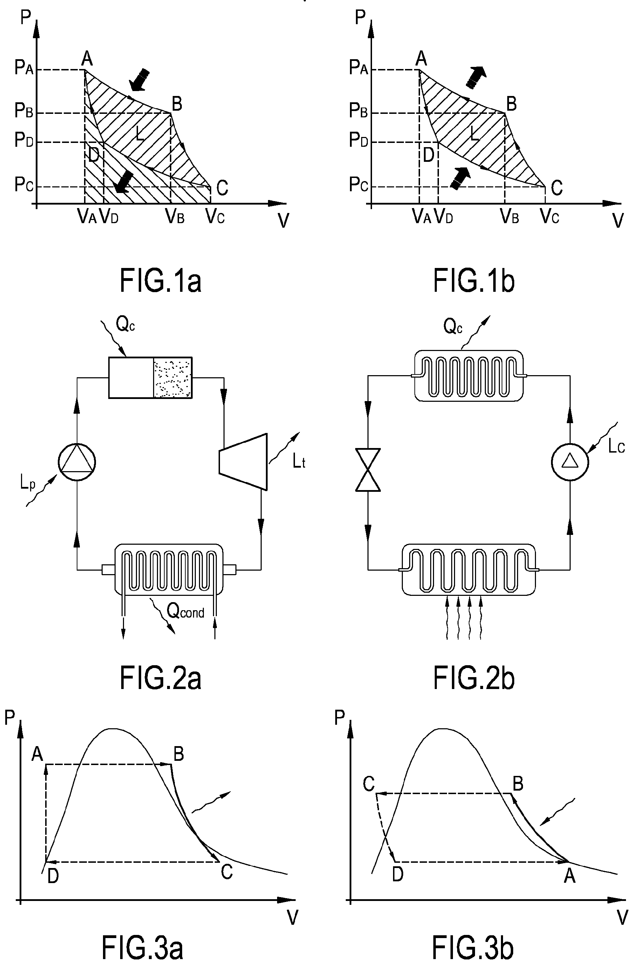

The cycle is represented in its entirety in figure 1a. It is constituted by two adiabatic transformations and two isothermal transformations. The area comprised between the four transformations defining the cycle represents the net work L obtained by means of the cycle. The work is obtained by a difference between the positive works L₂ = AB + BC and the negative works L₁ = CD + DA, that is: L = L₂-L1.

The overall heat Q which the thermal machine retains for itself is also given by the difference between the amount it has absorbed and the amount it has discharged. The obvious conclusion is that the work L which the machine is able to produce is given by the heat it has absorbed minus the heat it is yielded L = Q₂-Q₁.

From the above we can deduce that as is known only a part of the heat provided by the machine is transformed into work, while the remaining part is necessarily discharged externally of the system. For thermal machines it is therefore possible to define the performance as corresponding to the ratio between the work that the machine produces and the heat it is necessary to supply in input to the machine, i.e. : η = L/Q₂. Since L = Q₂-Q₁, the following expression is obtained: η = (Q₂-Q₁)/Q₂ = 1-Q₁/Q₂. In the case of a Carnot machine, the performance can be defined thus: η = 1-Q₁/Q₂ = 1-T₁/T₂ where the heat has been replaced by absolute temperatures expressed in Kelvin degrees.

In substance, to improve the thermal performance it is necessary to progressively reduce the quantity Q₁/Q₂, subtracted from value 1 that reduces performance. To do this the values of the numerator and denominator must be as far apart as possible, i.e. the heat source must work at the highest possible temperature and the cold source must be at the lowest possible temperature.

There are technological limitations on the temperature of the heat source in terms of cycle and material; on the cold source too there are limited possibilities: it is typically necessary to use the external ambient temperature or the temperature of a coolant fluid which is circulated in an exchanger.

The graph of figure 1a represents of the Carnot cycle known as "ordinary" but, using the same thermodynamic rules, Carnot's "refrigerating" cycle (figure 1b) can also be used. In practice, the transformations can take place in the opposite direction, availing of a volume from which heat is subtracted (instead of being added). To carry out this operation work is required. Therefore, oppositely to Carnot's ordinary machine, already mentioned above, in the refrigerating machine it is necessary to supply work in order to subtract heat.

The best application of the reversible thermal machine, which uses the Carnot cycle, is the one defined as the "heat pump". However, while in Canot's ordinary cycle the performance is quite easily calculable, for the refrigerating cycle the performance is difficult to calculate and therefore for the heat pumps it is simply defined as "useful refrigerating effect" or "coefficient of performance", i.e. the relation between the heat subtracted at low temperature and the work that is necessary so as to subtract it. Starting from the Carnot cycle, the technology evolved via studies made by numerous engineers, scientists and technologists. Among these, Rankine was the first to study the steam engine (with a separate condenser) scientifically and with strong focus. Between 1858 and 1859 he made a functioning cycle of the machine. Figure 2a illustrates the functioning scheme of a steam system with the Rankine cycle, in which the boiler constitutes the heat source which supplied the heat Qc to the engine and the condenser constitutes the cold source Qcond in which the residual heat flows after having produced the work Lt; the mechanical work Lt is obtained by the volumetric expander (turbine) and can be used for any use (traction, electricity production, etc).

Figure 3a schematically illustrates the Rankine cycle: the continuous line represents the theoretical cycle and the broken line the real cycle.

Naturally, in a design an ideal situation is typically hypothesized for each transformation, while the real transformations are never perfect as it is impossible to have perfect isobars, perfect adiabatics, perfect isotherms, perfect isochores.

In the cycle: first the boiler must supply the heat necessary Qc so as to transform the condensation water into saturated steam at a high temperature and pressure (transformation D-A). At this point the steam enters the turbine and expands by means of an isobar (transformation A-B), and then continues to expand by means of an adiabatic (transformation B-C). Work is obtained from the machine in this tract. In the following transformation C-C the exhausted fluid is compressed (at a constant pressure) and forced to transit through the exchanger-condenser, yielding head (Qcond) and transforming into condensation water which then, by means of the work (Lp) of the high-pressure pump, is returned to the boiler. From point D to point A, the condensed fluid is heated at a constant volume (isochore transformation) so as to be returned to the calibrated pressure.

A further thermal cycle is the Rankine-Hirn cycle (also known as the "overheated steam" thermal cycle, which represents an evolution of the ordinary Rankine cycle. The Rankine-Hirn cycle, in the prior art, is realizable with a thermal machine almost the same as the one used for an ordinary Rankine cycle, to which are added one or more overheaters of the saturated steam, located between the boiler and the turbine.

In substance, in the ordinary Rankine cycle, a pump is used to introduce condensation water into the boiler so as to be transformed into high-temperature and high-pressure steam, which is then sent directly to the turbine.

In the ordinary Rankine cycle the condensation water, via a pump, is introduced into the boiler so as to be transformed into high-temperature and pressure steam, which is then sent directly to the turbine. In the Rankine-Hirn cycle, before being sent into the turbine, the saturated steam exiting from the boiler is overheated in appropriate exchangers-overheaters, which are directly brushed by the flame and/or the combustion fumes of the boiler. This detail enables increasing the temperature of the variable-volume saturated steam, i.e. without increasing the pressure, enabling obtaining a greater thermal yield.

With the aim of preventing the use of special materials and/or the predisposing of expensive technical specifications (which would limit the economic advantage of the solution), the increase of temperature is maintained within predetermined limits. With a particular geometry of the turbine it is also possible to carry out a double overheating, or "re-overheating": in this case the steam exiting from the boiler is subjected to a first overheating before being sent on to a first turbine (at high pressure), at the outlet of which the steam undergoes a second overheating before being sent into a second turbine (at mean pressure), a further increase in the overall yield thus being possible.

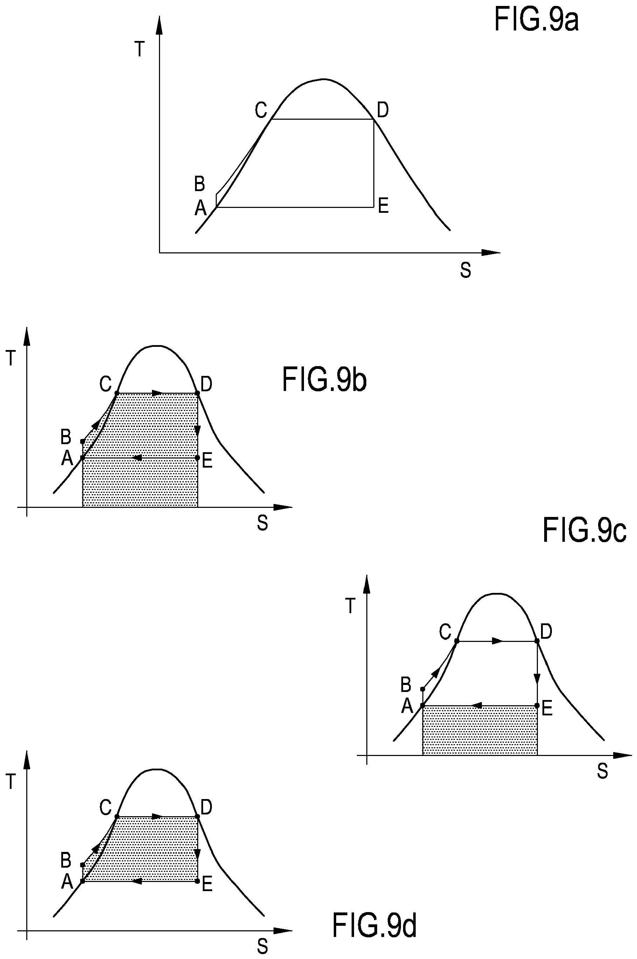

The Rankine and Rankine-Hirn cycles are schematically illustrated in figures 9a-9d, 10a-10d and 11, which show the thermodynamic transformations that make up the cycles on the entropic diagram T-S (temperature-entropy).

In greater detail, figure 9a shows the entropic diagram of an ordinary Rankine cycle where: in tract A-B the condensed water is pumped into the boiler; in tract B-C the boiler supplies the heat required for transforming the condensed water into saturated steam at high temperature and pressure; in tract C-D-E the steam enters the turbine and expands, producing work; in tract E-A the exhausted steam, transiting in the condenser, yields heat and transforms into condensed water which is then re-pumped into the boiler, ensuring the continuity of the cycle.

Figure 9b evidences the area of the graph corresponding to the quantity of heat supplied to the thermal machine and transmitted to the steam sent to the turbine. Figure 9c shows the area of the graph corresponding to the quantity of heat yielded to the condenser. Figure 9d shows the difference between the two above-mentioned areas, which corresponds to the useful work obtained with the cycle.

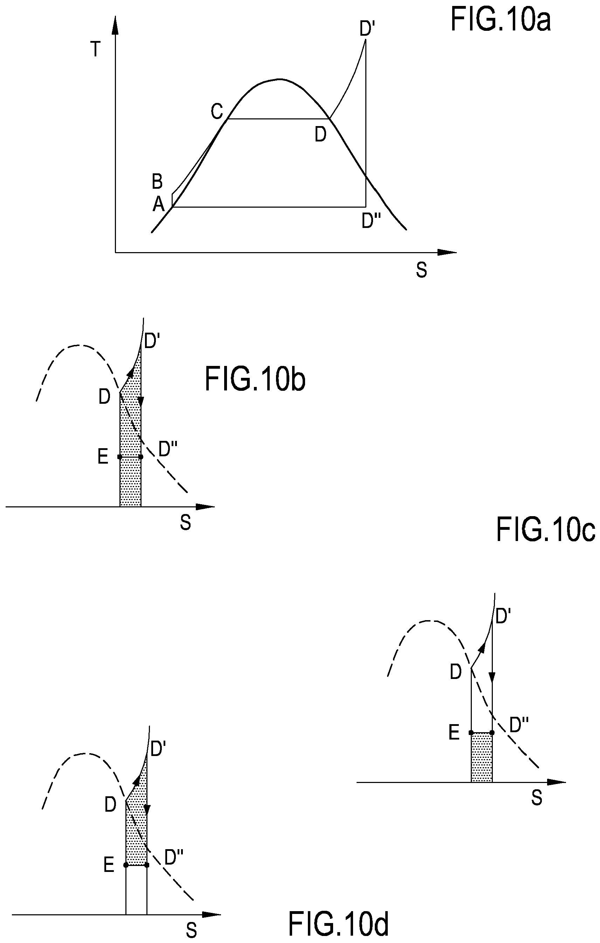

Figure 10a shows the entropic diagram relative to the Rankine-Hirn cycle. Figures 10b, 10c and 10d show the additional thermal areas with respect to the ordinary Rankine cycle. The difference, with respect to the ordinary Rankine cycle, relates to the saturated steam overheating step, which occurs in the path between the boiler and the turbine and corresponds to the greater heat amount (section D-D') of figure 10a, corresponding to the thermal areas of figure 10b), the greater heat yield to the condenser (section D"-A) f figure 10a, corresponding to the thermal area of figure 10c) and the greater work produced in the additional expansion (section D'-D" of figure 10a, corresponding to the thermal area of figure 10d).

The analysis of the energy exchanges enables clarifying how the overheating step enables the Rankine-Hirn cycle to produce a greater useful work than the work produced in an ordinary cycle, with a greater performance.

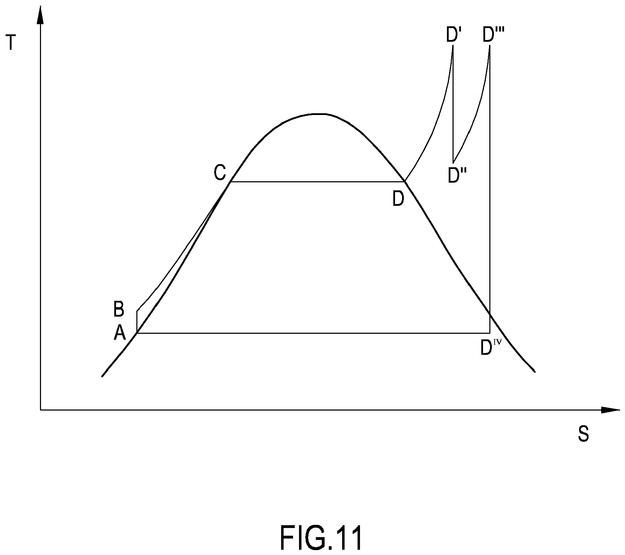

Lastly, figure 11 shows a Rankine-Hirn cycle with double overheating. The cycle comprises a first overheating of the section D-D', a first expansion in a first turbine (or high-pressure stage) in the tract D'-D", a second overheating in the section D"-D'" and a second expansion in a second turbine (or medium-pressure stage of the turbine) in section D"'-D^{IV}.

On completion of this cycle, in section D^{IV}-A, the exhausted steam, transiting in the exchanger-condenser, yields heat and is transformed into condensed water which then, via a high-pressure pump (in section A-B) is returned to the boiler, so that the cycle can recommence.

In substance there is a double overheating, in series, which twice raises the start point of two successive expansions: this enables further increasing the area of the graph that corresponds to the work carried out by the thermal machine. Therefore the overheating enables again increasing the useful work and the performance, both with respect to the ordinary Rankine cycle and with respect to the Rankine-Hirn cycle, with a single overheating.

In conclusion, in 1873 George Brayton realised an engine able to exploit the complete expansion of the gas up to atmospheric pressure; this was in fact the precursor of the continuous-flow gas turbine which, at present, is the one most widely used in large cogeneration and/or electrical energy production plants. Overall, various engines have been developed that realise a Rankine, Rankine-Hirn or other thermodynamic cycle. However, the Applicant has found that these solutions exhibit drawbacks and are susceptible to improvement in various ways. This is particularly true in the use of known engines with cogenerator and small-to-medium power (below 50 KWh); in these cases the drawbacks make their large-scale use problematic.

In detail, the machines using alternative internal-combustion engines are mechanically complicated, noisy (and, also for this reason they are made to function at low revolutions), are particularly polluting and have very high maintenance costs. Scroll centrifuge expanders, though used in some low-power micro-cogenerators, are not suitable for overheated high-pressure steam cycles. The Wankel rotary expander is also still under experimental testing and in any case exhibits big seal problems, as well as requiring steam injection and discharge valves.

As regards patents, WO 2012/123500 describes an energy conversion method of energy from a hot source into mechanical energy according to a thermodynamic cycle applied to a dry working fluid.

Also known are patent documents relating to other rotary-type machines.

For example, document US 2011/100321 described a power device (pump or motor) of a rotary type which comprises a toroidal cavity, an inclined transmission shaft, two rotors provided with pistons and two concentric universal joints which connect the shaft to the rotors.

Document WO 97/10419 illustrates a motor/pump/compressor of the rotary type provided with a double universal joint in which the compression ratio can be changed while the motor is operative. The motor has two rotors, each provided with two radial elements. The radial elements of the rotors define chambers internally of the motor chamber. Each rotor is connected to a different shaft, one arranged concentrically internally of the other. While the radial elements rotate about the respective shafts, the angular velocity thereof oscillates by effect of the aspiration, compression and combustion of the air-fuel mixture and the expulsion of the exhaust gases. Because of this oscillation and since each pair of spokes is out of phase by 90° with respect to the other couple, the dimensions of the chamber increase and diminish alternatingly.

Document US 3 337 123 illustrate a rotary compressor provided with two coaxial shafts having respective pistons that perform an advancing movement and a delayed motion with respect to one another.

Document WO 2008/061271 describes a method and a rotary vane piston motor for converting heat energy into higher-grade energy. According to WO 2008/061271, it is provided that the working fluid emerging from the rotary vane piston motor is liquefied in a cooling unit and is supplied in the liquefied state to a pressure pump and is supplied from the latter to a further heat exchanger for evaporation and is supplied in expanded form from the latter to the chambers of the rotary vane piston motor in order to move the pistons.

In general, the known solutions, apart from having problems related to mechanical complexity and functioning, are typically suitable only for use for a specific thermodynamic cycle and are difficult to use in different cycles or reversibly. A further drawback of some known solutions relates to the limited overall obtainable performance.

A drawback of known solutions using Rankine-Hirn cycles of the above-described type consists in the difficulty of carrying out overheating steps. In particular, the possibility of carrying out an overheating is subordinated to the presence of two distinct turbines (or expanders) in series, in inlet to each of which a respective overheating is performed. This configuration considerably complicates the structure of the thermal engines of known type and increases costs of manufacture and functioning.

In this situation the aim underpinning the present invention, in its various aspect and/or embodiments, is to disclose a cogeneration or micro-cogeneration plant able to produce electrical energy and heat in an efficient way and/or with a high thermodynamic performance. A further aim of the present invention is to realize a cogeneration or micro-cogeneration plane of simple and/or economical manufacture and/or of small size.

A further aim of the present invention is to provide a rotary expander that is in particular usable in thermal engines realising thermodynamically direction and/or inverse cycles of the Rankine or Rankine-Hirn type and which, among other things, are able to obviate one or more of the above-cited drawbacks.

A further aim of the present invention is to disclose a rotary expander characterised by high thermodynamic yield and/or by an excellent weight-power ratio. A further aim of the present invention is to provide a rotary expander characterised by a simple mechanical structure and/or one that is rapid to manufacture. A further aim of the present invention is to provide a rotary expander characterised by a low manufacturing cost.

These aims, and others besides, which will more fully emerge during the course of the following description, are substantially attained by a cogeneration plant of electrical and heat energy, according to one or more of the accompanying claims, as well as according to the following aspects.

In particular, the invention relates to a cogeneration plant of electrical energy and heat according to claim 1.

In an aspect, the invention relates to a rotary expander usable in particular for realising thermal machines able to use direct and/or inverse thermodynamic cycles of the Rankine and/or Rankine-Hirn type.

In an aspect, the rotary expander can be used as an apparatus able to produce mechanical energy using pressurized fluid flows, exothermal or endothermal cycles, or can pump, aspirate, compress, by means of the steps of dynamic reduction and increase of the volume of the chambers.

In an aspect, the rotary expander comprises:
- a housing provided with an internal cavity defining a toroidal cylinder (or an annular cylinder);
- a first pair of pistons and a second pair of pistons rotatably housed internally of the toroidal cylinder (or the annular cylinder), each pair of pistons being connected to a respective drive disc, the two pairs of pistons having the respective pistons alternated with one another;
- a casing and a three-shaft kinetic connection - or transmission - housed in said casing and configured and predisposed to operate a transmission of drive from and/or towards said two pairs of pistons, the kinetic connection comprising a primary shaft, a first secondary shaft and a second secondary shaft, each secondary shaft being connected to a respective pair of pistons.

In an aspect, the rotary expander can be provided with any drive transmission system between the two pairs of pistons and the primary shaft, in particular being able to use a transmission with four elliptical gears, of which two keyed at 90° between them on the primary shaft and the other two keyed respective on the drive discs of a pair and the other pair of pistons, or being able to use any other kinematically equivalent mechanism.

In an aspect, a continuous rotation of the primary shaft determines a periodical cyclical variation of the rotation velocity of the first secondary shaft and the second secondary shaft.

In an aspect, the primary shaft determines a periodical cyclical variation of the angular velocity of the first and the second secondary shaft and the corresponding pairs of pistons rotating internally of the toroidal cylinder, enabling generation of four distinct chambers having variable volume and ratio, to which correspond, for each complete rotation of the primary shaft, eight reduction phases and eight increasing stages of dynamic volume.

In an aspect, the transmission of the drive between the pistons and the primary shaft is obtained with the kinetic joint comprising a double concentric universal joint which connects the first and the second secondary shaft to the primary shaft, characterised in that while the primary shaft rotates with a constant angular velocity, the two secondary shafts rotate at an angular velocity that is periodically higher than, equal to or lower than the velocity of the primary shaft. In an aspect, the first pair of pistons is connected to a first drive disc and the second pair of pistons is connected to a first drive disc and the second pair of pistons is connected to a second drive disc. In an aspect the first secondary shaft is solid and solidly constrained at an end thereof to a semi-joint and at an opposite end thereof to the first drive disc. In an aspect, the second secondary shaft is hollow and solidly constrained at an end thereof to a respective semi-joint and at an opposite end thereof with the second drive disc. In an aspect the primary aspect is solidly constrained to a first semi-joint and a second semi-joint, positioned at 90° to one another and located on two different working circumferences, the first semi-joint having a smaller diameter than the second semi-joint. In an aspect, the kinetic connection comprises an internal disc on which four drive pins are rigidly fixed, positioned at 90° to one another, destined to mechanically connect the first semi-joint, solidly connected to the primary shaft, with the semi-joint of the first secondary shaft.

In an aspect the kinetic connection is characterized by an angle of inclination between the primary shaft and the two secondary shafts, the angle of inclination being selectable and/or variable, manually or automatically, in such a way as to determine an increase or a reduction in the difference between the average velocity and the minimum and maximum velocities of the corresponding pairs of pistons, the selection and/or variation enabling a modification, including dynamic, of the volume ratio between the chambers, i.e. the expansion-compression ratio thereof.

In an aspect the toroidal cylinder (or annular cylinder) is provided with a first inlet opening and a second inlet opening, distinct from one another, for the inlet of the high-pressure steam cylinder and a first expulsion opening and a second expulsion opening, distinct from one another, for the discharge of the used low-pressure steam, relating respectively to two different sections which, in the rotary expander, can be used in parallel, i.e. realizing the heat cycle in the two sections or in series, realizing a heat cycle at high pressure-temperature in the first section and a heat cycle at mean pressure-temperature in the second section.

In an aspect the inlet openings and the expulsion openings are afforded on the housing. In an aspect the inlet openings and the expulsion opens are symmetrical and located at 180° from one another, being able to determine, in a single toroidal (or annular) cylinder, two distinct loading and discharge sections of the steam.

In an aspect, by means of an angular, manual or automatic rotation of the casing with respect to the inlet and outlet openings it is possible to advance or delay the steps of the heat cycle with the aim of optimizing the thermodynamic performance and/or facilitating the autonomous start-up of the rotary expander.

In an aspect the rotary expander is completely without load-discharge valves and the relative mechanisms, as the pairs of pistons, in movement in the toroidal cylinder (or annular cylinder), determine the opening and closing of the two inlet openings and the two expulsion openings of the thermodynamic fluid.

In an independent aspect, the present invention further relates to a cogeneration plant of electrical and heat energy comprising the above-mentioned rotary expander configured such as to realise a Rankine or Rankine-Hirn thermodynamic cycle for producing electrical and heat energy for one or more dwelling units or for other users of any type.

In an aspect, the cogeneration plant comprises a steam generator arranged upstream of the rotary expander and connected thereto such as to provide a flow of high-temperature and high-pressure water steam able to set in rotation the two pairs of pistons of the rotary expander.

In an aspect the cogeneration plant comprises an electrical alternator/generator arranged downstream of the rotary expander and connected thereto in order to receive mechanical energy from the two pairs of rotary pistons and produce a quantity of electrical energy destined for sending to a user plant, preferably comprising one or more dwelling units (or other users of any type).

In an aspect the cogeneration plant comprises an exchanger/condenser arranged downstream of the rotary expander and connected thereto such as to receive therefrom a flow of exhausted steam at low pressure such as to extract therefrom a quantity of heat destined for sending to a heating plant and/or a production plant of hot sanitary water, preferably of one or more dwelling units (or other users of any type).

In an aspect the steam generator is identified by a boiler provided with a fuel burner. In a further aspect not part of the present invention, the cogeneration plant is configured by means of suitable transport ducts of the saturated steam in such a way that the flow of steam produced by the steam generator is injected into the rotary expander contemporaneously via the first and second inlet opening in a form of a dual flow of steam, where each inlet opening substantially receives half of the flow of steam and each outlet opening substantially expels half the flow of steam, in such a way as to produce a balanced rotation of the first and the second pair of pistons and a uniform and symmetrical variation, along a complete rotation of the pistons, of the volume of the chambers, the two halves of the flow of steam expelled from the two outlet openings being conveyed into the exchanger/condenser.

In an aspect, preferably alternative to the foregoing, the cogeneration plant is configured by means of special steam transport ducts, in such a way that the flow of steam produced by the steam generator is injected into the rotary expander entirely via the first inlet opening, in order to produce a rotation of the pairs of pistons, and expelled entirely via the first outlet opening, and from there it is entirely re-injected into the rotary expander through the second inlet opening, in order to produce a rotation of the pairs of pistons, and entirely expelled through the second outlet opening towards the exchanger/condenser, such as to determine a pathway in series of the steam in arrival from the steam generator. In an aspect the pathway includes an initial injection of steam into a chamber of the rotary expander though the first inlet opening, a first expulsion from the chamber via the first outlet opening, a subsequent re-injection into a further rotary expansion chamber through the second inlet opening and a subsequent expulsion from the further chamber via the second outlet opening. In an aspect the cogeneration plant comprises a first exchanger/overheater located in an intermediate position between the steam generator and the rotary expander, the first exchanger/overheater being configured and predisposed such as to operate an overheating of the steam flow.

In an aspect the cogeneration plant comprises a second exchanger/overheater configured and predisposed such as to operate an overheating of the steam flow and arranged in an intermediate position between the first outlet opening and the second inlet opening, such as to overheat the steam flow transiting along the pathway in series at a point downstream of the first expulsion from the rotary expander and upstream of the successive re-injection into the rotary expander.

In an aspect the first and/or the second exchanger-overheater can also be separated from the true and proper steam generator and the plant can comprise special conduits configured for enabling subjecting the steam to a first overheating in outlet from the steam generator, upstream of the first inlet opening, and a second overheating of the steam in the journey between the first expulsion opening and the second expulsion opening.

In an aspect the first and/or second exchanger-overheater can be integrated into the structure and/or in the conduit of the exhaust fumes of the steam generator.

In an aspect the steam generator and/or the first and/or second exchanger-overheater can use a fuel burner (for example gas) or any source of external heat, such as solar energy, biomass, non-refined fuel, high-temperature industrial waste, cold fusion or others besides, able to produce saturated steam at high temperature and pressure.

In an aspect, the cogeneration plant comprises appropriate conduits which connect comprise appropriate conduits which connect the steam generator with the steam exchangers-overheaters, with the rotary expander and the latter with the exchanger/condenser.

In an aspect, the cogeneration plant comprises a pressure switch operatively connected to the steam generator and configured such as to regulate the pressure of the steam internally of the steam generator.

In an aspect, the cogeneration plant comprises an electronic control apparatus configured such as to detect a demand for electrical energy and/or heat energy from a user of the electrical or heating plant, with the aim of predisposed and controlling the cogeneration plant of electrical and heat energy.

In an aspect, the electronic control apparatus is operatively connected to the steam generator and/or to the pressure switch such as to set a calibrated value of the pressure switch on the basis of the demand for electrical and/or heat energy, the electronic control apparatus being preferably configured such as to detect a pressure value and/or a temperature value of the steam internally of the steam generator.

In an aspect, the cogeneration plant comprises a check valve of the stem, in outlet from the generator, operatively connected to, and controllable by, the electronic control apparatus, so that on reaching the pressure requested in the steam generator, the valve is brought into an open configuration enabling exit of the high-pressure steam from the steam generator and, via inlet openings of the housing of the rotary expander, the steam is injected into the toroidal (or annular) cylinder and determines a start-up and normal functioning thereof.

In an aspect the cogeneration plant comprises a regulator operatively connected to the electric alternator/generator and configured such as to command production of electrical energy and control the tension and/or current values produced thereby.

In an aspect, the cogeneration plant comprises a collection tank, located downstream of the exchanger/condenser and configured such as to receive condensation water therefrom.

In an aspect, the cogeneration plant comprises a pump, preferably activated by the rotary expander and configured such as to return the condensation water, contained in the tank, to inside the generator in order to be newly heated and transformed into steam, in such a way as to ensure the continuity of the thermodynamic cycle.

In an aspect the cogeneration plant is configured and predisposed to operate at least the following steps and to pass between one and another step:
- a waiting step, in which the steam generator maintains the steam internally thereof at a determined calibrated pressure, corresponding to the calibrated value of the pressure switch, determined by means of an electronic control apparatus, so as to be able to activate the cycle rapidly,
- a start-up step, in which the steam generator heats the steam internally thereof in such a way as to increase the pressure thereof, the step enabling, when a demand for electrical energy is made by the users, matching the calibrated value to the pressure switch and therefore to the effective need;
- a step of normal functioning, in which the electronic control apparatus commands the opening of the check valve, causing the exiting of steam from the steam generator and the injection of the steam into the toroidal cylinder or the annular cylinder of rotary cylinder, which determines the rotation of the two pairs of pistons and, consequently, the driving of the alternator, giving rise to the production of electrical energy in the quantity requested by the users.

In a further independent aspect, the present invention relates to a cogeneration method of electrical and heat energy according to any one of claims from 1 to 6 comprising the following steps:
- predisposing a cogeneration plant according to any one of the preceding aspects, configured such as to realize a Rankine or Rankine-Hirn thermodynamic cycle;
- producing a high-pressure steam flow by means of a steam generator;
- sending the steam flow to the rotary expander of the cogeneration plant;
- setting in rotation, via the steam flow, the first pair of pistons and the second pair of pistons of the rotary expander;
- producing, by means of an electrical alternator/generator arranged downstream of the rotary expander and connected thereto such as to receive mechanical energy from the two pairs of rotary pistons, a quantity of electrical energy destined for a user plant, preferably of one or more dwelling units or other users of any type;
- extracting, by means of an exchanger/condenser arranged downstream of the rotary expander and connected thereto in order to receive therefrom a low-pressure exhausted steam flow, a quantity of heat destined to be sent to a heating and/or production plant of hot sanitary water, preferably of one or more dwelling units or other users of any type.

In an aspect the step of sending the steam flow to the rotary expander comprises the step of injecting the steam into the rotary expander contemporaneously through the first and the second inlet opening in a form of a dual steam flow, where each inlet opening substantially receives a half of the steam flow and each outlet opening expels substantially a half of the steam flow, in such a way as to produce a balanced rotation of the first and the second pair of pistons and a uniform variation, along a complete rotation of the pistons, of the volume of the chambers, the two halves of the steam flow expelled from the two outlet openings being conveyed into the exchanger/condenser.

In an aspect the step of sending the steam flow to the rotary expander comprises steps of injecting the steam into the rotary expander entirely through the first inlet hole such as to produce a rotation of the pair of pistons, entirely expelling the steam via the first outlet opening, thence re-injecting the steam entirely into the rotary expander via the second inlet opening, such as to produce a rotation of the pairs of pistons, and expelling the steam entirely through the second outlet opening towards the exchanger/condenser, such as to determine a series pathway of the steam coming from the steam generator.

In an aspect the method comprises the step of overheating the steam flow in outlet from the steam generator by means of a first exchanger-heater located in an intermediate position between the steam generator and the rotary expander.

In an aspect the method comprises the step of overheating the steam flow in transit along the pathway in series at a point downstream of the outlet opening and upstream of the second inlet opening, via which the steam is re-injected into the rotary expander, the overheating step being operated by means of a second exchanger-overheater arranged in an intermediate position between the first outlet opening and the second inlet opening.

Further characteristics and advantages will more fully emerge from the detailed description that follows.

The description will be made in the following with reference to the accompanying drawings, provided purely by way of non-limiting example, in which:
- figures 1a and 1b represent the graphs of Carnot theoretical cycles, respectively ordinary and refrigerating;
- figures 2a and 2b represent thermodynamic diagrams and relative main components of the Rankine cycles, respectively ordinary and refrigerating;
- figures 3a and 3b represent the graphs of the Rankine theoretical cycles, respective ordinary and refrigerating;
- figure 4 shows the section of an example embodiment of a rotary expander according to the present invention, realized using a toroidal cylinder (or annular cylinder) and a kinetic joint which activates the two pairs of pistons housed in the toroidal cylinder;
- figures 4a and 4b respectively show the external ring and the internal driving disc of the kinetic joint, with the relative pins;
- figures 5 and 6 show the generic section of a rotary expander, according to the present invention, realised by means of a toroidal cylinder (or annular cylinder) which uses, as a drive transmission between the pistons and the primary shaft, a specific combination of four elliptical gears;
- figure 7 represents a block diagram of a possible embodiment of a micro-cogenerator of electrical energy and heat, not part of the present invention, comprising the rotary expander, used in an ordinary Rankine thermodynamic cycle;
- figures from 8a to 8h schematically illustrate the positions assumed by the two pairs of pistons of the rotary expander, object of the present invention, internally of the toroidal cylinder (or annular cylinder), for each single rotation of the primary shaft;
- figures 9a-9d schematically illustrate the Rankine ordinary cycle on the entropic diagram T-S;
- figures 10a-10d schematically illustrate the Rankine-Hirn cycle, with a single overheating, on the entropic diagram T-S;
- figure 11 illustrates the Rankine-Hirn cycle with double overheating, on the entropic diagram T-S;
- figure 12 illustrates the block diagram of a possible embodiment of a micro-cogenerator of electrical and heat energy, not part of the present invention, comprising a rotary expander used with a balanced dual flow configuration and used in a Rankine-Hirn thermodynamic cycle with a single overheating;
- figure 13 illustrates the block diagram of a further possible embodiment of a micro-cogenerator of electrical and heat energy, according to the present invention, comprising a rotary expander used with a double-flow configuration in series and used in a Rankine-Hirn thermodynamic cycle with a single overheating;
- figure 14 illustrates a block diagram of a further possible embodiment of a micro-cogenerator of electrical and heat energy, according to the present invention, comprising a rotary expander used with a double-flow series configuration and used in a Rankine-Hirn thermodynamic cycle with only one overheating;
- figure 15 illustrates a block diagram of a further possible embodiment of a micro-cogenerator of electrical and heat energy, according to the present invention, comprising a rotary expander used with a double-flow series configuration and used in a Rankine-Hirn thermodynamic cycle with double overheating.

With reference to the figures of the drawings, reference number 1 denotes in its entirety a rotary expander, according to the present invention, while number 50 denotes a micro-cogenerator according to the present invention.

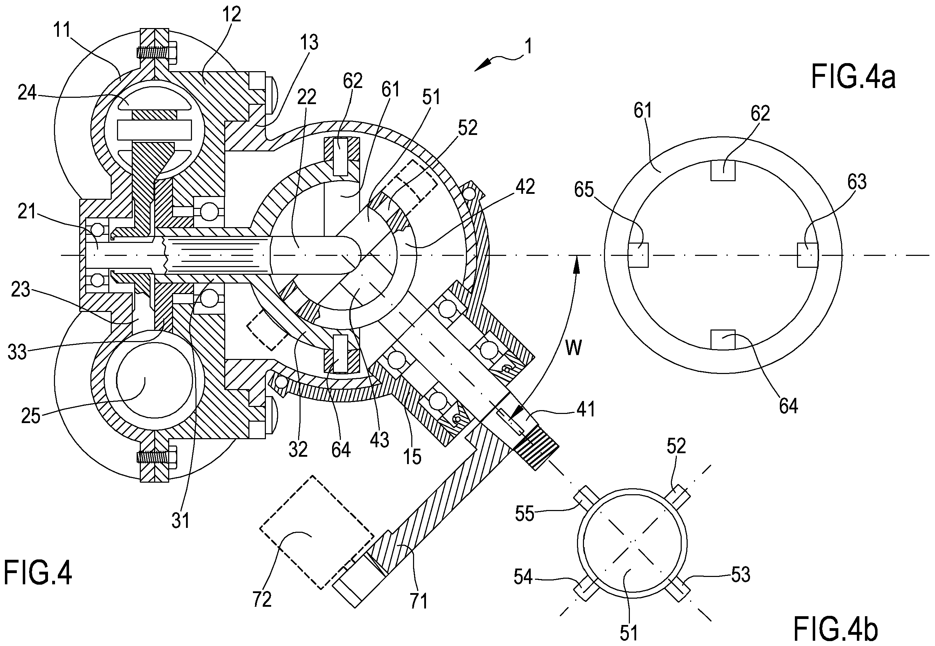

Figures 4, 4a and 4b illustrate the rotary expander 1 of the present invention, which can advantageously operate in a thermal machine which realises a Rankine or Rankine-Hirn direct or inverse thermodynamic cycle.

The rotary expander 1 comprises a casing, preferably consisting of two halves 11, 12 coupled to one another, which internally defines a cavity that constitutes the toroidal cylinder (or annular cylinder). The rotary expander 1 further comprises a first pair of pistons 24-25 and a second pair of pistons 34-35, respectively connected to a first drive disc 23 and to a second drive disc 33, where the drive discs, with the profile thereof, determine the completion of the internal circumference of the toroidal cylinder (or annular cylinder).

The cylinder of the rotary expander is by way of example represented with a toroidal shape; in fact the circular section of the cylinder (and, correspondingly, the shape of the pair of pistons 24-25 visible in section) can be observed. The cylinder may, alternatively, be of an annular shape, i.e. having a ring conformation and a section that is, for example, square or rectangular.

In a preferred but not exclusive embodiment, object of the inventive idea, the rotary expander 1 comprises: a housing 13 which houses the mechanisms for the transmission of motion, and a support 15 for a primary motor shaft 41. The primary drive shaft is prepared with the splining required for fastening a flywheel 71 and a generic starter system 72 which is configured to rotate the flywheel 71 so as to move the pistons 24-25-34-35 in the right direction and up to a position corresponding to the two inlet openings 81-82 in order to receive the flow of steam able to determine the start-up of the rotary expander 1. The above-mentioned positioning system 72 may, by way of example, be a pinion or another mechanism which couples (at the right moment) with a rack or other component of the flywheel 71.

The two pairs of pistons 24-25 and 34-35, located inside the toroidal cylinder (or annular cylinder), determine a reciprocal dynamic creation of four distinct rotating chambers (C1-C2-C3-C4) which, in rotation, assume a volume periodically variable between a minimum value and a maximum value.

The different angular speed of the two pairs of pistons 24-25 and 34-35 is obtained by the particular kinematic jointing system, an integral part of the present inventive idea, where the primary shaft 41 is solidly constrained to two forks 42 and 43 (respectively, a first and second semi-joint) positioned perpendicularly between them and operating on different work circumferences. The first fork 42, by means of the internal disc drive 51 and the four pins 52, 53 thereof 54 and 55, is mechanically connected to a fork 22 (or semi-joint) of a solid secondary shaft 21 which heads up to the drive disc 23 and the pair of pistons 24-25. A second fork 43, via the external drive disc 61 and the four pins 62, 63, 64 and 65 thereof, is mechanically connected to a fork 32 (or respective semi-joint) of a secondary shaft 31 which is headed at the drive disc 33 and the pair of pistons 34-35.

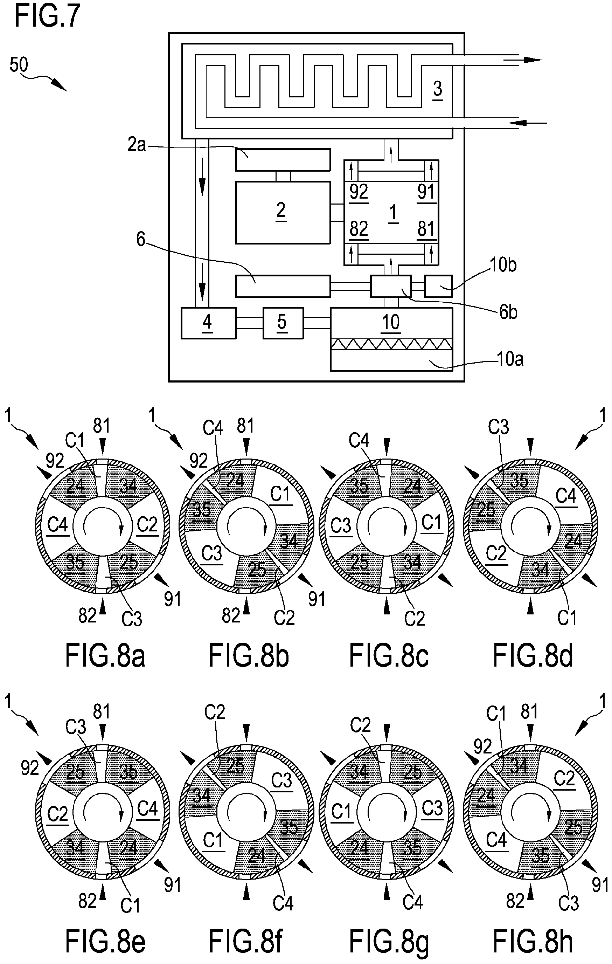

The primary shaft 41 has a certain inclination angle W with respect to the secondary shafts 21 and 31; therefore, by exploiting the mutual configuration of the forks and the trees, the following is obtained: the primary shaft 41 is forced by the flywheel 71 to rotate at constant speed, while the two secondary shafts 21 and 31, though having the same average speed, rotate with a periodically-variable angular velocity (i.e. using for this purpose what is precisely the main "anomaly" of the universal joint). The characteristic is well-evidenced in figures 8a-8h, where it can be observed that in the rotational movement the two pairs of pistons 24-25 and 34-35 cyclically approach and move away from one another, creating a continuous periodical variation of the volume of the four chambers C1, C2, C3, C4, delimited by the pistons themselves. The pistons of the two pairs of pistons are positioned, internally of the toroidal cylinder, alternated with one another: this means that (as is clear from the diagrams of figures 8a-8h), proceeding circularly along the toroidal cylinder there is first an encounter with a piston (24) belonging to the first pair of pistons, a piston (34) belonging to the second pair of pistons, the further piston (25) belonging to the first pair of pistons and the further piston (35) belonging to the second pair of pistons, thus completing an angular width of a whole revolution.

Particularly suitable for use as the operating fluid in the rotary expander 1 of the present invention is water steam, another gas or liquid suitable for the purpose.

With reference to figures 8a-8h, the rotary expander 1 of the present inventive idea, is defined as "dual-flow" as in the same cylinder are two inlet (or loading) openings 81-82 of steam at high pressure and two expulsion (or discharge) openings 91-92 of the low pressure or exhausted steam, normally symmetrical at 180° to one another. This means that the rotary expander 1 can be functionally divided into two "sections" that can be independently crossed by a flow of steam; a first section is the one between the first inlet opening 81 up to the first expulsion opening 91, while a second section is comprised between the second inlet opening 82 up to the second discharge opening 92. The passage of the high-pressure steam and the expansion thereof internally of the two sections determines the rotation of the pairs of pistons and, consequently, of the corresponding chambers C1-C2-C3-C4, respectively defined between two adjacent pistons.

The rotary expander 1 is characterized in that for each revolution of the primary shaft (drive shaft), with "parallel" use in a dual balanced flow, eight possible single thermal cycles can be made, complete with input-expansion-steam expulsion, or, with "series" use, in a single stream, four thermal cycles can be made, complete with input-expansion-transfer-expansion-expulsion of steam.

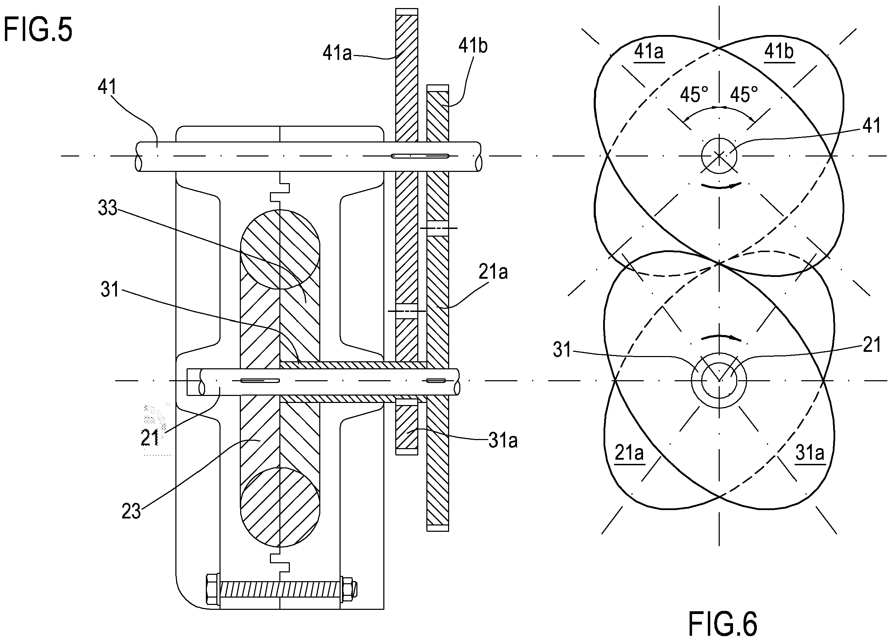

Note that, without departing from the inventive idea, the rotary expander 1 can be equipped with any system for transmitting drive between the two pairs of pistons and the primary shaft. In particular, as shown in figures 5 and 6, it is possible to use a transmission with four elliptical gears, two of which are keyed at 90° to one another on the primary shaft and the other two respectively keyed on the drive discs of one and the other pair of pistons. In this embodiment, to obtain a rotation of the two pairs of pistons at different periodically variable speeds and with opposite values, and to obtain an overall rotation at a constant speed, two pairs of elliptical gears 41a-41b and 21a-31a can be used. The first two gears 41a-41b are keyed - at 90° to one another - on the primary shaft 41 and the second two gears 21a-31a, are in turn keyed on the first and second secondary shaft, coaxial to one another.

With reference to the above, and for reasons of clarity, listed below, by way of non-limiting example, are the main functional modes that can be adopted by a cogeneration system 50 using the rotary expander 1 of the present invention.

Figure 7 illustrates a first functional mode for the rotary expander 1, based on the Rankine ordinary cycle, where the cogeneration system 50 is configured, by means of appropriate conduits for transport of the steam, with a parallel injection, in such a way that the steam flow produced by the steam generator 10 is injected (at high temperature and pressure) into the rotary expander 1, dividing the entire flow in exactly half in each of the two loading openings 81, 82 or, respectively, half in the first and second "section", in which the steam expands, producing useful work, then to be expelled (at low temperature and pressure) through the two exhaust ports 91, 92 towards the exchanger-condenser 3. In this configuration, in the succession of thermal cycles, there is a symmetrical variation of the volume of the chambers with a perfectly-balanced rotation of the two pairs of pistons, a circumstance that allows rotation, even at very high speed, without vibration and noise.

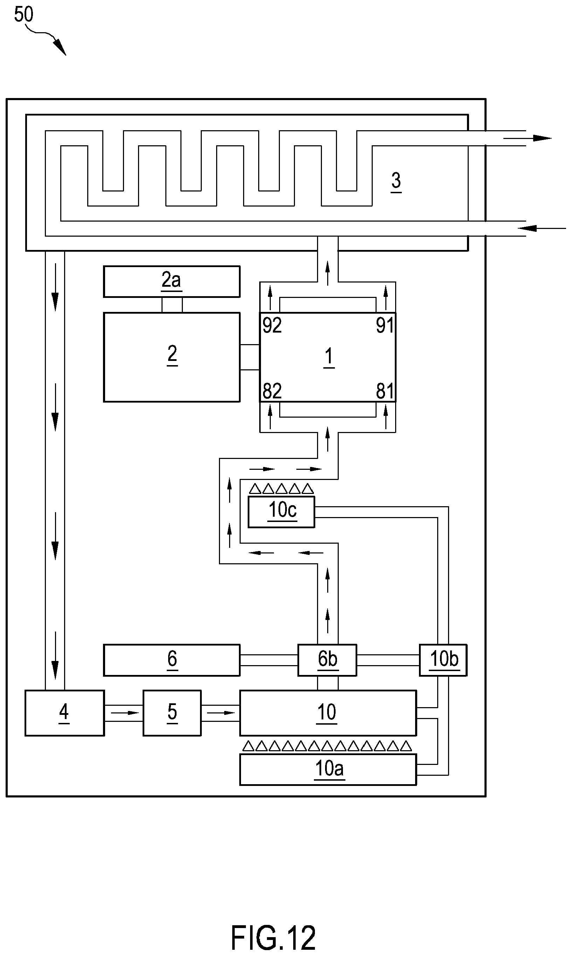

Figure 12 illustrates a second preferred functional mode of the rotary expander 1, based on the Rankine-Hirn cycle with one only overheating of the saturated steam, where the cogeneration system 50 is configured, with appropriate conduits for steam transport with parallel injection, in such a way that the steam flow produced by the steam generator 10 (by means of a burner 10a) at high temperature and pressure is first made to pass through a first exchanger-overheater 10c, where the steam undergoes a further increase in temperature without an increase in pressure, and is then injected into the rotary expander 1, dividing the entire flow exactly in half in each of the two inlet openings 81, 82 or, respectively, by half in the first and half in the second "section", where the steam expands, producing useful work, then to be expelled (at low temperature and pressure), through the two discharge openings 91, 92 towards the exchanger-condenser 3. In this configuration, in the succession of thermal cycles, there is a symmetrical variation of the volume of the chambers with a perfectly balanced rotation of the two pairs of pistons, a circumstance that enable a rotation, even at very high speed, without vibration and noise.

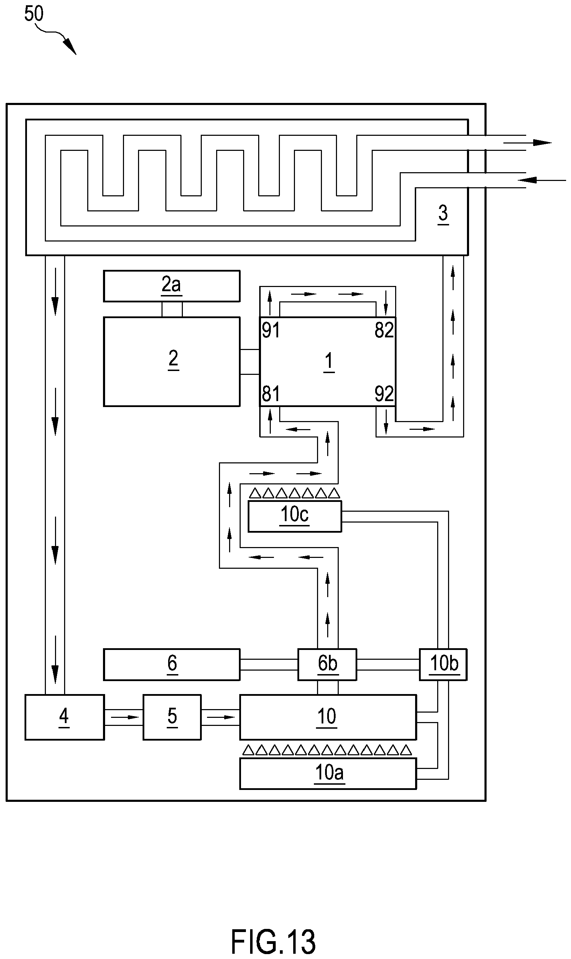

In figure 13 a third functional mode rotary expander 1 is illustrated, which makes use of the Rankine-Hirn cycle with only one steam overheating process, where the cogeneration system 50 is configured using appropriate steam transport conduits with "series" injection, so that the flow of steam produced by the steam generator 10 (using a burner 10a), high temperature and pressure, is made to pass through a first exchanger/overheater 10c, where the steam undergoes a further temperature increase without an increase in pressure and is then entirely injected through the first inlet opening 81, in the first section of the rotary expander 1, where it expands up to "medium pressure", creating useful work, and is then "decanted" entirely, through the first expulsion opening 91, and the second inlet opening 82, into the second section of the rotary expander, where the expansion is completed, creating additional useful work, until it reaches low pressure before being entirely expelled, through the second expulsion opening 92, towards the heat exchanger/condenser 3, for the continuation of the cycle.

In other words, figure 13 illustrates an embodiment which provides a dual flow "in series", and further comprises a respective first heat exchanger-overheater 10c located (as in the plant of figure 12) in an intermediate position between the steam generator 10 and the rotary expander 1. The first heat exchanger-overheater is configured to operate an overheating of the steam flow, so that the system of figure 13 achieves a Rankine-Hirn cycle, i.e. a Rankine cycle with overheating.

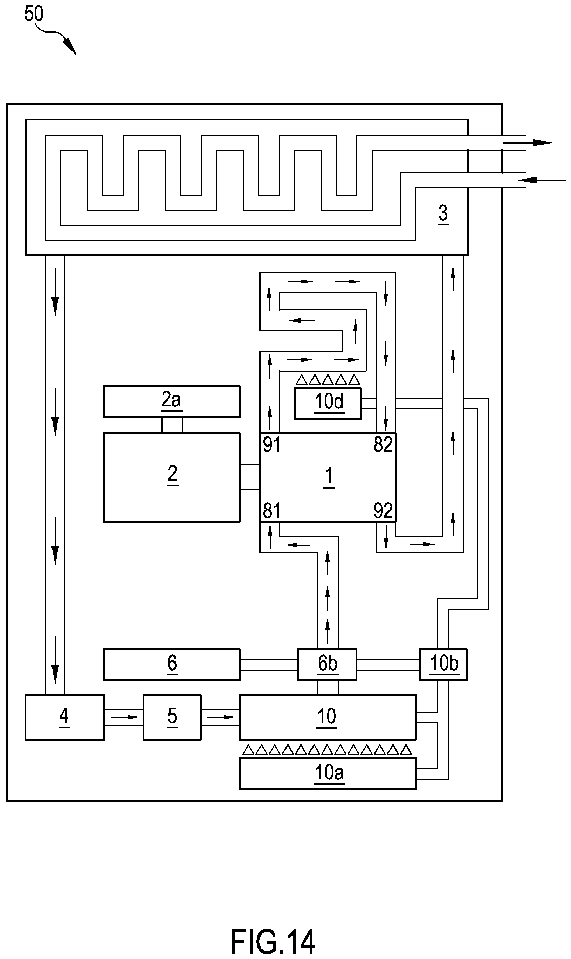

In figure 14 is shown a fourth functional mode rotary expander 1, which makes use of the Rankine cycle-Hirn with a single overheating, in which the cogeneration system 50 is configured, by appropriate transport conduits "in series", so that the steam flow produced by the steam generator 10 (by a burner 10a), at high temperature and pressure, is completely injected through the first inlet opening 81 in the first section of the rotary expander 1, where it expands up to "medium-low pressure", creating useful work, and is then entirely "decanted", through the expulsion opening 91 and made to cross the heat exchanger-overheater 10d, where the steam undergoes a considerable increase of temperature and pressure and is then injected through the second inlet opening 82 into the second section of the rotary expander, so as to complete the expansion of the steam and produce useful work before being entirely expelled (at low temperature and pressure), through the second expulsion opening 92, towards the heat exchanger/condenser 3, for the continuation of the cycle.

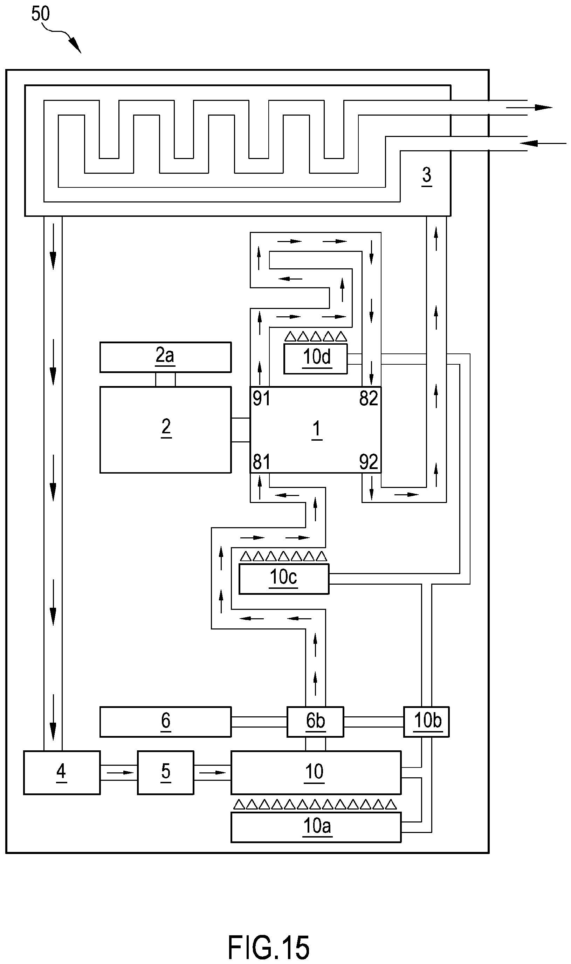

Figure 15 illustrates a fifth mode functional rotary expander 1, which makes use of the Rankine cycle with two-Hirn overheatings, where the cogeneration system 50 is configured, by appropriate steam transport conduits with "series" injection, so that the flow of saturated steam produced by the steam generator 10 at high temperature and pressure is passed through the first exchanger-overheater 10c, where the steam undergoes a temperature increase without an increase in pressure, is then all injected through the first inlet opening 81, the first section of the rotary expander 1, where it expands to "average pressure" creating useful work, after which it is entirely expelled through the first expulsion opening 91, is induced to pass through the second heat exchanger-overheater 10d, where the steam again undergoes a temperature and pressure increase and is then completely entered, through the second inlet port 82, in the second section of the rotary expander 1, in such a way to complete the expansion of the steam and produce useful work before being completely expelled (at low temperature and pressure), through the second expulsion outlet 92, towards the heat exchanger/condenser 3, for the continuation of the cycle.

In other words, figure 15 shows, as in figures 13 and 14, a plant with dual flow in series; however, this system is completed with a further step of overheating : in fact the plant comprises the second exchanger-overheater 10d configured to operate an overheating of the steam flow and arranged in an intermediate position between the first expulsion opening and the second input opening, in such a way as to intercept and overheat the steam flow in transit along the path in series at a point downstream of the first expulsion from the rotary expander and upstream of the subsequent reinsertion of the rotary expander.

The plant of figure 15 appears to be the most complete, as it includes both a first overheating of the steam (upstream of the rotary expander) and a subsequent overheating of the steam between one section and the other of the path thereof in series in the rotary expander. This plant therefore realises a Rankine-Hirn cycle with double overheating (or re-overheating).

The second overheating ("internal" of the rotary expander path) enables increasing the energy of the steam exiting the first section of the rotary expander, before it is injected into the second section: in this way the efficiency of the plant increases considerably, without, however, requiring a high expenditure of energy, as the energy input acts directly on the steam and does not require a change of state. In practice, the steam is overheated before it is sent to the heat exchanger/condenser, i.e. before it passes into the liquid state, so as to provide steam to the second section at high-energy but without "wasting" energy in a transition of state.

The series configuration of the system of figure 13, 14 or 15 is obtainable thanks to the peculiar structure of rotary expander of the present invention, it being possible to have two independent sections defined by two different inlet openings 81, 82 and expulsion 91, 92 openings, and this makes it possible to realize even very diversified thermodynamic cycles. In fact, as there are two independent sections defined by two different inlet and discharge openings, steam can be introduced from the steam generator (possibly overheated) in the first section, then overheated again and re-injected into the second section. In contrast, in the prior art the "double overheating" is not possible with normal expanders and can be possible only with dual-stage turbines or with two different turbines in series, with an obvious increase in the manufacturing and operational costs.

In contrast, the plant of the present invention can only employ a rotary expander 1 (i.e. a turbine) having two inlets and two independent outlets through which a cycle can run in series at steam path as follows: inlet at the first injection inlet opening - outlet from first outlet opening - inlet at the second inlet opening - outlet at the second expulsion outlet.

Further, the installations of figure 12, 13, 14 and 15 are particularly suitable for applications requiring a high production of energy and/or heat, such as industrial applications.

The first and/or second overheatings, respectively by the first and second heat exchanger-overheater, can raise the temperature of the steam up to values, for example, of 500°C-600°C.

As shown in figures 12, 13, 14 or 15, the above-mentioned pressure switch 10b is preferably connected to the steam generator, to the first and/or second exchanger-overheater (even more preferably to all heater organs) so as to adjust the pressure and/or operating temperature.

The electricity and heat cogeneration plant 50 includes the above-mentioned rotary expander 1 which is configured and predisposed to use any steam generator 10 which makes use of any fuel burner 10a or of any external heat source, such as solar energy, biomass, unrefined fuel, high temperature industrial exhaust, cold fusion, or others besides, suitable for producing steam at high temperature and pressure.

In the following a description is made of the operation of rotary expander of the present invention, in a "preferential" application thereof, i.e. within a cogeneration plant 50 of electricity and heat, advantageously utilizable for example in the domestic field for the production of electrical and heat energy for one or more dwelling units.

With reference to figure 12, a block diagram of the cogeneration unit 50 is represented, although not exclusively, in which it utilises a thermodynamic cycle with only a Rankine-Hirn overheating, equipped with one or more of the following components :
- a steam generator 10 having a fuel burner 10a and 10b of a pressure switch, able to provide the system with the required amount of saturated high pressure and temperature steam;
- an electronic control 6, operatively connected to the steam generator 10, able to detect the electricity demand on the part of the users, so as to determine the calibration of the pressure switch 10b and to control the check valve of the steam circuit 6b ;
- an exchanger-overheater 10c, thermally integrated into the generator 10 or in the fumes exhaust conduit of the burner 10a, which has the purpose of increasing the value of the steam temperature in outlet from the generator 10, before sending the overheated steam in the rotary expander 1;
- a rotary expander 1, the main object of the present invention, able to receive the steam at high temperature and pressure produced by the generator 10 and then overheated in the heat exchanger-overheater 10c, the transforming it (via the rotation of the pistons, as represented in figures 8a-8h) into useful work suitable for operating the alternator/generator of electric current 2;
- an alternator/generator of electrical current 2, mechanically connected to the rotary expander 1, with a connected second tension-voltage regulator 2a, arranged so as to control the tension and/or current values;
- an exchanger-condenser 3, arranged downstream of the rotary expander 1 and attached thereto so as to receive the flow of exhausted steam at low pressure and transform it into condensed water, by subtracting an amount of heat destined to be sent to a heating system and/or to production of sanitary hot water, for supply to one or more housing units or other users of any kind;
- a tank for collecting the condensed water 4, positioned downstream of the exchanger/condenser 3 ;
- a high-pressure pump 5, preferably actuated by the rotary expander 1, able to return the condensed water to inside the generator 10, so as to ensure the continuity of the thermodynamic cycle.

In the thermodynamic cycle, the rotary expander 1 of the present inventive idea performs two main functions: the first is to use the steam, produced by the high temperature and pressure generator 10 and carrying higher temperature due to the heat exchanger-overheater 10c, in order to transform it, during the expansion cycle, into useful work (corresponding to the lines C-D^{II} of the graph of figure 10a), the second function is to "compress" the exhausted steam, at low temperature and pressure, and expel it, forcing it to pass through the exchanger-condenser 3 (corresponding to sections D^{II}-A of the graph of figure 10a), with the least possible expenditure of energy and ensuring the continuity of the cycle.

In the preferred embodiment that uses the thermodynamic Rankine-Hirn cycle with one overheating only, the operational functionality is accomplished preferably through the following steps :
- a waiting step, in which the electronic control device 6, assisted by a pressure switch 10b, controls the operation of the burner 10a and thus the heat input to the generator 10, with the aim of maintaining the saturated steam at the predetermined or automatically determined temperature-pressure;
- a preparatory phase, in which, upon occurrence of an electricity demand from the users, the burner 10a of the generator 10 is activated in order to heat the saturated steam up to the automatically determined temperature-pressure values;
- a start-up step, in which the electronic control device 6 commands the opening of the valve 6b, causing the "controlled" exit of the steam from the generator 10 towards the heat exchanger-overheater 10c and the injecting of the steam in a hypothetical system of self-starter (not shown in the figure) and, simultaneously, through the loading openings 81-82, respectively in the first and second rotary expander section 1, so as to set the two pairs of pistons and the main shaft, mechanically connected to the alternator/generator 2, in rotation;
- a stage of normal functioning, in which by using the electronic equipment 6 controlling the burner 10a and determining the temperature-pressure of the steam generator 10, if necessary, the rotation speed of rotary expander 1 could also be regulating so as to adapt it to the actual demand and/or need for electricity production.

Numerous advantages are attained with the present invention, which obviates one or more of the drawbacks described for the known solutions. First, the rotary expander 1 has a better mechanical performance and improves the volumetric efficiency, leading to a significant improvement in the overall efficiency of the Rankine and/or Rankine-Hirn cycle. An indisputable advantage is represented by the fact that, as it can use a high-performance (condensing) combustion system, pollutant emissions are drastically reduced. A further advantage is that the rotary expander 1 is completely free of loading-discharge valves and related mechanisms, as the pistons in motion also perform this function. The considerable space available on the circumference of the toroidal cylinder (or annular cylinder) enables multiple solutions for the arrangement of the inlet and outlet openings, aimed at improving the dynamics in the working fluid paths.

The rotary expander 1 also has the following additional advantages :
- all its components are easily producible in series, with a considerable lowering of production costs ;
- there is no need for special materials or alloys other than those normally used in conventional engines;

- lubrication of the cylinder, piston and hard drive of the same is guaranteed by the thermodynamic fluid (demineralized water steam) used in closed circuit (with no need for maintenance);
- lubrication of the kinematic transmission can be guaranteed with a mineral oil of a known type, as it can be contained in a sump with a perfect hydraulic seal;
- in applications with a high number of revolutions, in order to reduce mechanical friction and increase yields, the pistons can be free of elastic straps and constructed so as to exploit the fluid viscosity characteristics;
- for applications in medium/low number of revolutions that require high pressure seal, the cylinder and piston can be made of a toroidal shape using the elastic straps of conventional rotary engines.

Lastly, with its great constructive simplicity and the fact it has very little need for maintenance, the rotary expander 1 of the present invention obviates the typical drawbacks of known alternating internal combustion engines or rotary expanders, making the industrialization of small cogeneration and/or trigeneration units possible for individual dwelling units or small communities.

## Claims

1. A cogeneration plant (50) of electrical and heat energy configured such as to realise a Rankine or Rankine-Hirn thermodynamic cycle for producing electrical and heat energy, the plant comprising:
- a rotary expander comprising:
- a housing (11, 12) provided with an internal cavity defining a toroidal cylinder or an annular cylinder; wherein the annular cylinder is provided with a first inlet opening (81) and a second inlet opening (82) for inlet of high-pressure steam into the cylinder, and with a first outlet opening (91) and a second outlet opening (92) for discharge of exhausted steam;
- a first pair of pistons (24, 25) and a second pair of pistons (34-35) rotatably housed internally of the toroidal cylinder or the annular cylinder, with said respective pistons alternated between one another;
- a casing (13) and a three-shaft kinetic transmission housed in said casing (13), the transmission comprising a primary shaft (41), a first secondary shaft (21) and a second secondary shaft (31), each secondary shaft being connected to a respective pair of pistons (24-25; 34-35), in which a continuous rotation of the primary shaft determines a periodical cyclical variation of the rotation velocity of the first secondary shaft (21) and the second secondary shaft (31);
- a steam generator (10) arranged upstream of the rotary expander (1) and connected thereto such as to provide a flow of water steam able to set in rotation the two pairs of pistons (24-25; 34-35);
- an electrical alternator/generator (2) connected to the rotary expander (1) in order to receive mechanical energy from the two pairs of rotary pistons (24-25; 34-35) and produce a quantity of electrical energy destined for sending to a user plant;
- an exchanger/condenser (3) arranged downstream of the rotary expander (1) and connected thereto such as to receive therefrom a flow of exhausted steam such as to extract therefrom a quantity of heat;
**characterized in that** steam transport ducts inject the flow of steam produced by the steam generator (10) into the rotary expander (1) entirely via the first (81) inlet opening, in order to produce a rotation of the pairs of pistons, and expelled entirely via the first outlet opening (91), and from there it is entirely re-injected into the rotary expander (1) through the second inlet opening (82), in order to produce a rotation of the pairs of pistons, and entirely expelled through the second outlet opening (92) towards the exchanger/condenser (3), such as to determine a pathway in series of the steam in arrival from the steam generator, the pathway including an initial injection of steam into a chamber of the rotary expander though the first inlet opening, a first expulsion from the chamber via the first outlet opening, a subsequent re-injection into a further rotary expansion chamber through the second inlet opening and a subsequent expulsion from the further chamber via the second outlet opening.

2. The plant of claim 1, wherein the primary shaft (41) of the rotary expander (1) determines a periodical cyclic variation of the rotation velocity of the first secondary shaft (21) and of the second secondary shaft (31) and of the corresponding pairs of pistons (24-25; 34-35) rotating internally of the toroidal cylinder, enabling generating of four distinct chambers (C1-C2-C3-C4) having variable volume and ratio, to which correspond, for each complete rotation of the primary shaft (41), eight reduction phases and eight increasing stages of dynamic volume.

3. The plant of one of the preceding claims, wherein the inlet openings and outlet openings are afforded in the housing (11, 12).

4. The plant of one of the preceding claims, wherein the inlet openings and outlet openings are symmetrical.

5. The plant of one of the preceding claims, wherein by means of an angular rotation, either manual or automatic, of the casing (13) with respect to the inlet and outlet openings (81, 82, 91, 92) it is possible to advance or delay the thermal cycle stages in order to optimize the thermodynamic performance and/or to facilitate the autonomous start-up of the rotary expander (1).

6. The cogeneration plant (50) of one of the preceding claims, comprising an exchanger/overheater (10d) predisposed such as to operate an overheating of the steam flow and arrange in an intermediate position between the first outlet opening (91) and the second inlet opening (82), such as to overheat the steam flow transiting along the pathway in series at a point downstream of the first expulsion from the rotary expander and upstream of the successive re-injection into the rotary expander.

7. A cogeneration method of electrical and heat energy comprising steps of:
- predisposing a cogeneration plant according to any one of claims from 1 to 6, configured such as to realize a Rankine or Rankine-Hirn thermodynamic cycle;
- producing a high-pressure steam flow by means of a steam generator (10);
- sending the steam flow to the rotary expander (1) of the cogeneration plant (50);
- setting in rotation, via the steam flow, the first pair of pistons (24-25) and the second pair of pistons (34-35) of the rotary expander (1);
- producing, by means of an electrical alternator/generator (2) arranged downstream of the rotary expander (1) and connected thereto such as to receive mechanical energy from the two pairs of rotary pistons (24-25; 34-35), a quantity of electrical energy destined for a user plant, preferably of one or more dwelling units or other users of any type;
- extracting, by means of an exchanger/condenser (3) arranged downstream of the rotary expander (1) and connected thereto in order to receive therefrom a low-pressure exhausted steam flow, a quantity of heat destined to be sent to a heating and/or production plant of hot sanitary water, preferably of one or more dwelling units or other users of any type.

8. The method of the preceding claim, wherein:
the step of sending the steam flow to the rotary expander (1) comprises steps of injecting the steam into the rotary expander (1) entirely through the first inlet hole (81) such as to produce a rotation of the pair of pistons (24-25;34-35), entirely expelling the steam via the first outlet opening (91), thence re-injecting the steam entirely into the rotary expander (1) via the second inlet opening (82), such as to produce a rotation of the pairs of pistons (24-25;34-35), and expelling the steam entirely through the second outlet opening (92) towards the exchanger/condenser (3), such as to determine a series pathway of the steam coming from the steam generator (10).

9. The method of claim 7 or 8, comprising:
- overheating the steam flow in outlet from the steam generator (10) by means of a first exchanger-heater (10c) located in an intermediate position between the steam generator (10) and the rotary expander (1).

10. The method of one of claims from 7 to 9, comprising:
- overheating the steam flow in transit along the pathway in series at a point downstream of the outlet opening (91) and upstream of the second inlet opening (82), via which the steam is re-injected into the rotary expander (1), the overheating step being operated by means of a second exchanger-overheater (10d) arranged in an intermediate position between the first outlet opening (91) and the second inlet opening (82).

## Patentansprüche

1. Kraft-Wärme-Kopplungsanlage (50) von elektrischer Energie und Wärmeenergie, welche derart eingerichtet ist, dass ein thermodynamischer Rakine- oder Rakine-Hirn-Kreislauf zum Erzeugen von elektrischer Energie und Wärmeenergie realisiert ist, wobei die Anlage umfasst:
- eine rotierende Expandiereinrichtung, umfassend:
- ein Gehäuse (11, 12), welches mit einem inneren Hohlraum bereitgestellt ist, welcher einen toroidalen Zylinder oder einen ringförmigen Zylinder definiert, wobei der ringförmige Zylinder mit einer ersten Einlassöffnung (81) und einer zweiten Einlassöffnung (82) zum Einlass von Hochdruckdampf in den Zylinder und mit einer ersten Auslassöffnung (91) und einer zweiten Auslassöffnung (92) zur Abgabe von verbrauchtem Dampf bereitgestellt ist;
- ein erstes Paar von Kolben (24, 25) und ein zweites Paar von Kolben (34-35), welche rotierbar innerhalb des toroidalen Zylinders oder des ringförmigen Zylinders untergebracht sind, wobei die jeweiligen Kolben untereinander alterniert sind;
- ein Gehäuse (13) und ein Dreiwellen-Kinetikgetriebe, welches in dem Gehäuse (13) untergebracht ist, wobei das Getriebe eine Primärwelle (41), eine erste Sekundärwelle (21) und eine zweite Sekundärwelle (31) umfasst, wobei jede Sekundärwelle mit einem jeweiligen Paar von Kolben (24-25; 34-35) verbunden ist, wobei eine kontinuierliche Rotation der Primärwelle eine periodische zyklische Variation der Rotationsgeschwindigkeit der ersten Sekundärwelle (21) und der zweiten Sekundärwelle (31) bestimmt;
- eine Dampferzeugungseinrichtung (10), welche stromaufwärts der rotierenden Expandiereinrichtung (1) angeordnet und damit derart verbunden ist, dass ein Strom von Wasserdampf bereitgestellt wird, welcher dazu geeignet ist, die beiden Paare von Kolben (24-25; 34-35) in eine Rotation zu versetzen;
- einen elektrischen Wechselstromgenerator/Generator (2), welcher mit der rotierenden Expandiereinrichtung (1) verbunden ist, um mechanische Energie von den beiden Paaren von Rotationskolben (24-25; 34-35) zu erhalten und eine Menge von elektrischer Energie zu erzeugen, welche zum Senden zu einer Anlage eines Benutzers bestimmt ist;
- einen Tauscher/Kondensator (3), welcher stromabwärts der rotierenden Expandiereinrichtung (1) angeordnet und damit derart verbunden ist, dass er davon einen Strom von verbrauchtem Dampf erhält, um davon eine Menge von Wärme zu extrahieren;
**dadurch gekennzeichnet, dass** Dampftransportkanäle den Dampfstrom, welcher durch die Dampferzeugungseinrichtung (10) erzeugt und vollständig über die erste Auslassöffnung (91) ausgestoßen wird, in die rotierende Expandiereinrichtung (1) vollständig über die erste (81) Einlassöffnung injizieren, um eine Rotation der Paare von Kolben zu erzeugen, und von dort wird dieser vollständig in die rotierende Expandiereinrichtung (1) durch die zweite Einlassöffnung (82) re-injiziert, um eine Rotation der Paare von Kolben zu erzeugen, und vollständig durch die zweite Auslassöffnung (92) in Richtung des Tauschers/Kondensators (3) derart ausgestoßen, dass ein Pfad in Reihe des Dampfes bei Ankunft aus der Dampferzeugungseinrichtung bestimmt wird, wobei der Pfad eine initiale Injektion von Dampf in eine Kammer der rotierenden Expandiereinrichtung durch die erste Einlassöffnung, einen ersten Ausstoß aus der Kammer durch die erste Auslassöffnung, eine anschließende Re-Injektion in eine weitere Kammer einer rotierenden Expansionskammer durch die zweite Einlassöffnung und einen anschließenden Ausstoß aus der weiteren Kammer über die zweite Auslassöffnung umfasst.

2. Anlage nach Anspruch 1, wobei die Primärwelle (41) der rotierenden Expandiereinrichtung (1) eine periodische zyklische Variation der Rotationsgeschwindigkeit der ersten Sekundärwelle (21) und der zweiten Sekundärwelle (31) und der entsprechenden Paare von Kolben (24-25; 34-35) bestimmt, welche innerhalb des toroidalen Zylinders rotieren, wobei ein Erzeugen von vier verschiedenen Kammern (C1-C2-C3-C4) ermöglicht wird, welche ein variables Volumen und Verhältnis aufweisen, der, für jede vollständige Rotation der Primärwelle (41) acht Reduktionsphasen und acht Erhöhungsstufen eines dynamischen Volumens entsprechen.

3. Anlage nach einem der vorhergehenden Ansprüche, wobei die Einlassöffnungen und die Auslassöffnungen in dem Gehäuse (11, 12) bereitgestellt sind.

4. Anlage nach einem der vorhergehenden Ansprüche, wobei die Einlassöffnungen und Auslassöffnungen symmetrisch sind.

5. Anlage nach einem der vorhergehenden Ansprüche, wobei es mittels einer entweder manuellen oder automatischen Winkelrotation des Gehäuses (13) in Bezug auf die Einlass-und Auslassöffnungen (81, 82, 91, 92) möglich ist, die thermischen Zyklusstufen voranzubringen oder zu verzögern, um eine thermodynamischer Leistung zu optimieren und/oder das autonome Anlaufen der rotierenden Expandiereinrichtung (1) zu erleichtern.

6. Kraft-Wärme-Kopplungsanlage (50) nach einem der vorhergehenden Ansprüche, umfassend einen Tauscher/Überhitzer (10d), welcher derart prädesponiert ist, dass ein Überhitzen des Dampfstromes bewirkt wird, und in einer Zwischenposition zwischen der ersten Auslassöffnung (91) und der zweiten Auslassöffnung (82) derart angeordnet ist, dass er den Dampfstrom überhitzt, welcher entlang des Pfades in Reihe an einem Punkt stromabwärts des ersten Ausstoßes aus der rotierenden Expandiereinrichtung und stromaufwärts der nachfolgenden Re-Injektion in die rotierende Expandiereinrichtung übergeht.

7. Kraft-Wärme-Kopplungsverfahren von elektrischer Energie und Wärmeenergie umfassend, die folgenden Schritte:
- Prädisponieren einer Kraft-Wärme-Kopplungsanlage nach einem der Ansprüche 1 bis 6, welche derart eingerichtet ist, dass ein thermodynamischer Rakine- oder Rakine-Hirn-Kreislauf realisiert wird;
- Erzeugen eines Hochdruckdampfstromes mittels einer Dampferzeugungseinrichtung (10);
- Senden des Dampfstroms an die rotierende Expandiereinrichtung (1) der Kraft-Wärme-Kopplungsanlage (50);
- Versetzen des ersten Paares von Kolben (24-25) und des zweiten Paares von Kolben (34-35) der rotierenden Expandiereinrichtung (1) in eine Rotation, über den Dampfstrom;
- Erzeugen, mittels eines elektrischen Wechselstromgenerators/Generators (2), welcher stromabwärts der rotierenden Expandiereinrichtung (1) angeordnet und damit derart verbunden ist, dass er mechanische Energie von den beiden Paaren rotierender Kolben (24-25; 34-35) erhält, einer Menge von elektrischer Energie, welche für eine Anlage eines Benutzers, vorzugsweise von einer oder mehreren Wohneinheiten oder anderen Benutzern eines beliebigen Typs, bestimmt ist;
- Extrahieren, mittels eines Tauschers/Kondensators (3), welcher stromabwärts der rotierenden Expandiereinrichtung (1) angeordnet und damit verbunden ist, um davon einen verbrauchtem Dampfstrom von geringem Druck zu erhalten, einer Menge von Wärme, welche dazu bestimmt ist, an eine Heiz-und/oder Erzeugungsanlage von warmem Sanitärwasser, vorzugsweise von einer oder mehreren Wohneinheiten oder anderen Benutzern eines beliebigen Typs, gesendet zu werden.

8. Verfahren nach dem vorhergehenden Anspruch, wobei:
der Schritt des Sendens des Dampfstroms an die rotierende Expandiereinrichtung (1) Schritte eines Injizierens des Dampfes in die rotierende Expandiereinrichtung (1) vollständig durch das erste Einlassloch (81) derart, dass eine Rotation des Paares von Kolben (24-25; 34-35) erzeugt wird, eines vollständigen Ausstoßens des Dampfes über die erste Auslassöffnung (91), eines nachfolgenden Re-Injizierens des Dampfes vollständig in die rotierende Expandiereinrichtung (1) über die zweite Einlassöffnung (82) derart, dass eine Rotation der Paare von Kolben (24-25; 34-35) erzeugt wird, und eines Ausstoßens des Dampfes vollständig durch die zweite Auslassöffnung (92) in Richtung des Tauschers/Kondensators (3) derart umfasst, dass ein Pfad des Dampfes in Reihe bestimmt wird, welcher aus der Dampferzeugungseinrichtung (10) kommt.

9. Verfahren nach Anspruch 7 oder 8, umfassend:
- Überhitzen des Dampfstroms bei Auslass aus der
Dampferzeugungseinrichtung (10) mittels eines ersten Wärmetauschers (10c), welcher in einer Zwischenposition zwischen der Dampferzeugungseinrichtung (10) und der rotierenden Expandiereinrichtung (1) lokalisiert ist.

10. Verfahren nach einem der Ansprüche 7 bis 9, umfassend:
- Überhitzen des Dampfstroms bei Übergang entlang des Pfades in Reihe an einem Punkt stromabwärts der Auslassöffnung (91) und stromaufwärts der zweiten Einlassöffnung (82), über welche der Dampf in die rotierende Expandiereinrichtung (1) re-injiziert wird, wobei der Schritt des Überhitzens mittels eines zweiten Tauscher-Überhitzers (10d) bewegt wird, welcher in einer Zwischenposition zwischen der ersten Auslassöffnung (91) und der zweiten Einlassöffnung (82) angeordnet ist.

## Revendications

1. Centrale de cogénération (50) d'énergie électrique et thermique configurée afin de réaliser un cycle thermodynamique de Rankine ou de Rankine-Hirn pour la production d'énergie électrique et thermique, la centrale comprenant :
- un expanseur rotatif comprenant :
- un logement (11, 12) muni d'une cavité interne définissant un cylindre toroïdal ou un cylindre annulaire ; le cylindre annulaire étant muni d'une première ouverture d'entrée (81) et d'une seconde ouverture d'entrée (82) pour l'orifice d'entrée de vapeur à haute pression dans le cylindre, et avec une première ouverture de sortie (91) et une seconde ouverture de sortie (92) pour évacuer la vapeur d'échappement ;
- une première paire de pistons (24-25) et une seconde paire de pistons (34-35) logées de manière rotative au plan interne du cylindre toroïdal ou du cylindre annulaire, avec lesdits pistons respectifs en alternance l'un par rapport à l'autre ;
- un boîtier (13) et une transmission cinétique à trois arbres logée dans ledit boîtier (13), la transmission comprenant un arbre primaire (41), un premier arbre secondaire (21) et un second arbre secondaire (31), chaque arbre secondaire étant accouplé à une paire respective de pistons (24-25 ; 34-35), dans lequel une rotation continue de l'arbre primaire détermine une variation cyclique périodique de la vitesse de rotation du premier arbre secondaire (21) et du second arbre secondaire (31) ;
- un générateur de vapeur (10) disposé en amont de l'expanseur rotatif (1) et accouplé à celui-ci afin de fournir un flux de vapeur d'eau capable de placer en rotation les deux paires de pistons (24-25 ; 34-35) ;
- un alternateur/générateur électrique (2) accouplé à l'expanseur rotatif (1) afin de recevoir l'énergie mécanique de la part des deux paires de pistons rotatifs (24-25 ; 34-35) et de produire une quantité d'énergie électrique destinée à l'envoi à une centrale utilisateur ;
- un échangeur/condenseur (3) disposé en aval de l'expanseur rotatif (1) et accouplé à celui-ci afin de recevoir de la part de celui-ci un flux de vapeur d'échappement afin d'en extraire une quantité de chaleur ;
**caractérisée en ce que** les conduits de transport de vapeur injectent le flux de vapeur produit par le générateur de vapeur (10) dans l'expanseur rotatif (1) entièrement par l'intermédiaire de la première (81) ouverture d'entrée, afin de produire une rotation des paires de pistons, et expulsé entièrement par l'intermédiaire de la première ouverture de sortie (91), et depuis celle-ci il est entièrement ré-injecté dans l'expanseur rotatif (1) à travers la seconde ouverture d'entrée (82), afin de produire une rotation des paires de pistons, et entièrement expulsé à travers la seconde ouverture de sortie (92) vers l'échangeur/condenseur (3), afin de déterminer un passage en série de la vapeur dans l'arrivée depuis le générateur de vapeur, le passage comprenant une injection initiale de vapeur dans une chambre de l'expanseur rotatif à travers la première ouverture d'entrée, une première expulsion depuis la chambre par l'intermédiaire de la première ouverture de sortie, une ré-injection ultérieure dans une chambre d'expansion rotative ultérieure à travers la seconde ouverture d'entrée et une expulsion ultérieure depuis la chambre ultérieure par l'intermédiaire de la seconde ouverture de sortie.

2. Centrale selon la revendication 1, l'arbre primaire (41) de l'expanseur rotatif (1) déterminant une variation cyclique périodique de la vitesse de rotation du premier arbre secondaire (21) et du second arbre secondaire (31) et des paires correspondantes de pistons (24-25 ; 34-35) tournant au plan interne du cylindre toroïdal, permettant la génération de quatre chambres distinctes (C1-C2-C3-C4) présentant un volume et un rapport variable, auxquelles correspondent, pour chaque rotation complète de l'arbre primaire (41), huit phases de réduction et huit stades d'augmentation du volume dynamique.

3. Centrale selon l'une des revendications précédentes, les ouvertures d'entrée et les ouvertures de sortie étant proposées dans le logement (11, 12).

4. Centrale selon l'une des revendications précédentes, les ouvertures d'entrée et les ouvertures de sortie étant symétriques.

5. Centrale selon l'une des revendications précédentes, dans laquelle à l'aide d'une rotation angulaire, soit manuelle soit automatique, du boîtier (13) par rapport aux ouvertures d'entrée et de sortie (81, 82, 91, 92) il est possible d'avancer ou de retarder les stades de cycle thermique afin d'optimiser la performance thermodynamique et/ou de faciliter le démarrage autonome de l'expanseur rotatif (1).

6. Centrale de cogénération (50) selon l'une des revendications précédentes, comprenant un échangeur/surchauffeur (10d) prédisposé afin d'opérer un surchauffage du flux de vapeur et disposé dans une position intermédiaire entre la première ouverture de sortie (91) et la seconde ouverture d'entrée (82), afin de surchauffer le flux de vapeur transitant le long du passage en série au niveau d'un point en aval de la première expulsion de l'expanseur rotatif et en amont de la ré-injection successive dans l'expanseur rotatif.

7. Procédé de cogénération d'énergie électrique et thermique comprenant les étapes de :
- prédisposition d'une centrale de cogénération selon l'une quelconque des revendications 1 à 6, configurée afin de réaliser un cycle thermodynamique de Rankine ou de Rankine-Hirn ;
- production d'un flux de vapeur à haute pression à l'aide d'un générateur de vapeur (10) ;
- envoi du flux de vapeur vers l'expanseur rotatif (1) de la centrale de cogénération (50) ;
- mise en place en rotation, par l'intermédiaire du flux de vapeur, de la première paire de pistons (24-25) et de la seconde paire de pistons (34-35) de l'expanseur rotatif (1) ;
- production, à l'aide d'un alternateur/générateur électrique (2) disposé en aval de l'expanseur rotatif (1) et accouplé à celui-ci afin de recevoir l'énergie mécanique des deux paires de pistons rotatifs (24-25 ; 34-35), d'une quantité d'énergie électrique destinée à une centrale utilisateur, préférablement d'une ou plusieurs unités d'habitation ou d'autres utilisateurs de type quelconque ;
- extraction, à l'aide d'un échangeur/condenseur (3) disposé en aval de l'expanseur rotatif (1) et accouplé à celui-ci afin de recevoir de la part de celui-ci un flux de vapeur d'échappement à basse pression, d'une quantité de chaleur destinée à être envoyée à une centrale de chauffage et/ou de production d'eau sanitaire chaude, préférablement d'une ou plusieurs unités d'habitation ou d'autres utilisateurs de type quelconque.

8. Procédé selon la revendication précédente, dans lequel :
l'étape d'envoi du flux de vapeur vers l'expanseur rotatif (1) comprend les étapes d'injection de vapeur dans l'expanseur rotatif (1) entièrement à travers le premier trou d'entrée (81) afin de produire une rotation de la paire de pistons (24-25 ; 34-35), expulsant entièrement la vapeur par l'intermédiaire de la première ouverture de sortie (91), ré-injectant ainsi entièrement la vapeur dans l'expanseur rotatif (1) par l'intermédiaire de la seconde ouverture d'entrée (82), afin de produire une rotation des paires de pistons (24-25 ; 34-35), et l'expulsion de la vapeur entièrement à travers la seconde ouverture de sortie (92) vers l'échangeur/condenseur (3), afin de déterminer un passage en série de la vapeur provenant du générateur de vapeur (10).

9. Procédé selon la revendication 7 ou 8, comprenant :
- le surchauffage du flux de vapeur dans l'orifice d'entrée à partir du générateur de vapeur (10) à l'aide d'un premier échangeur-dispositif de chauffage (10c) localisé dans une position intermédiaire entre le générateur de vapeur (10) et l'expanseur rotatif (1).

10. Procédé selon l'une quelconque des revendications 7 à 9, comprenant :
- le surchauffage du flux de vapeur transitant le long du passage en série au niveau d'un point en aval de l'ouverture de sortie (91) et en amont de la seconde ouverture d'entrée (82), par l'intermédiaire duquel la vapeur est ré-injectée dans l'expanseur rotatif (1), l'étape de surchauffage fonctionnant à l'aide d'un second échangeur-surchauffeur (10d) disposé dans une position intermédiaire entre la première ouverture de sortie (91) et la seconde ouverture d'entrée (82).
